# EUROPEAN PATENT APPLICATION

(11) **EP 4 759 548 A1**
(43) Date of publication of application: **17.06.2026**
(21) Application number: 25222222.9
(22) Date of filing: 10.12.2025
(51) Int. Cl.: B41J 2/21, B41J 3/60, B41J 11/00, B41J 29/393, H04N 1/409

(54) **PRINTING APPARATUS AND CONTROL METHOD FOR PRINTING APPARATUS**

(30) Priority: 12.12.2024 JP 2024217296
(71) Applicant: Seiko Epson Corporation, Tokyo 160-8801 (JP)
(72) Inventor: ONISHI, Yasunori, Suwa-shi, 392-8502 (JP); YOKOZAWA, Toshihiro, Suwa-shi, 392-8502 (JP); TAKISHIMA, Keigo, Suwa-shi, 392-8502 (JP); HIYAMA, Sota, Suwa-shi, 392-8502 (JP); OMAE, Kyoko, Suwa-shi, 392-8502 (JP)
(74) Representative: Lewis Silkin LLP

(57) **Abstract**

A control unit (30) executes causing a pretreatment liquid ejecting unit (14) to eject pretreatment liquid to a feature region of a first surface of a medium corresponding to a feature point of a first image or a feature point of a second image, causing an ink ejecting unit to eject ink onto the first surface of the medium, onto the feature region of which the pretreatment liquid has been ejected, to thereby print the first image on the first surface, causing an imaging unit to image the medium, on which the first image is printed, from a second surface that is a surface opposite to the first surface, and correcting, based on a captured image and the feature point of the first image or the feature point of the second image, the second image to be printed on the second surface.

## Description

The present application is based on, and claims priority from JP Application Serial Number 2024-217296, filed December 12, 2024, the disclosure of which is hereby incorporated by reference herein in its entirety.

### BACKGROUND

### 1. Technical Field

The present disclosure relates to a printing apparatus and a control method for a printing apparatus.

### 2. Related Art

For example, JP-T-2022-502291 discloses a double-sided printing system that, after printing a first image on a first surface of a printing material, which is an example of a medium, captures the first image from a second surface side, which is the back side of the first surface, and matches the position of the first image of the first surface and the position of the second image of the second surface.

JP-T-2022-502291 is an example of the related art.

However, in such a double-sided printing system, the imaging is performed from the second surface on the side opposite to the first surface on which the first image is printed. For this reason, the first image sometimes cannot be sufficiently identified from a captured image. Therefore, it has been desired to improve the printing accuracy of the first image and the second image.

### SUMMARY

According to an aspect of the present disclosure, there is provided a printing apparatus including: a pretreatment liquid ejecting unit configured to eject pretreatment liquid onto a medium; an ink ejecting unit configured to eject ink onto the medium to thereby print an image on the medium; an imaging unit configured to image the medium; and a control unit, wherein the control unit executes: causing the pretreatment liquid ejecting unit to eject the pretreatment liquid to a feature region of a first surface of the medium corresponding to a feature point of a first image or a feature point of a second image; causing the ink ejecting unit to eject the ink onto the first surface of the medium, onto the feature region of which the pretreatment liquid was ejected, to thereby print the first image on the first surface; causing the imaging unit to image the medium, on which the first image is printed, from a second surface that is a surface opposite to the first surface; and correcting, based on a captured image captured by the imaging unit and the feature point of the first image or the feature point of the second image, the second image to be printed on the second surface.

According to another aspect of the present disclosure, there is provided a control method for a printing apparatus that prints a first image by ejecting ink onto a first surface of a medium and prints a second image by ejecting the ink onto a second surface of the medium, the second surface being a surface opposite to the first surface, the method including: causing the printing apparatus to eject pretreatment liquid to a feature region of the first surface corresponding to a feature point of the first image or a feature point of the second image; causing the printing apparatus to eject the ink onto the first surface of the medium, onto the feature region of which the pretreatment liquid was ejected, to thereby print the first image on the first surface; causing the printing apparatus to image the medium, on which the first image is printed, from the second surface; and correcting, based on a captured image and the feature point of the first image or the feature point of the second image, the second image to be printed on the second surface.

### BRIEF DESCRIPTION OF THE DRAWINGS

FIG. 1 is a schematic diagram illustrating a printing apparatus in a first embodiment.
FIG. 2 is a block diagram illustrating an electric configuration of the printing apparatus in the first embodiment.
FIG. 3 is a schematic diagram illustrating a first surface of a medium after printing in the first embodiment.
FIG. 4 is a schematic diagram illustrating a second surface of the medium after printing in the first embodiment.
FIG. 5 is a schematic diagram illustrating first image data in the first embodiment.
FIG. 6 is a schematic diagram illustrating second image data in the first embodiment.
FIG. 7 is a schematic diagram illustrating feature points and feature regions in the first embodiment.
FIG. 8 is a flowchart illustrating feature point setting processing in the first embodiment.
FIG. 9 is a flowchart illustrating first printing control processing in the first embodiment.
FIG. 10 is a flowchart illustrating second printing control processing in the first embodiment.
FIG. 11 is a schematic diagram illustrating feature points and feature regions in a second embodiment.
FIG. 12 is a flowchart illustrating first printing control processing in a fifth embodiment.
FIG. 13 is a flowchart illustrating feature point setting processing in a sixth embodiment.
FIG. 14 is a flowchart illustrating first printing control processing in the sixth embodiment.
FIG. 15 is a flowchart illustrating second printing control processing in the sixth embodiment.
FIG. 16 is a flowchart illustrating first printing control processing in a seventh embodiment.

### DESCRIPTION OF EMBODIMENTS

### First Embodiment

Hereinafter, a printing apparatus and a control method for a printing apparatus according to an embodiment are explained. In the following explanation, in a state in which the printing apparatus is installed on a horizontal plane, an axis intersecting the horizontal plane is defined as a Z axis, an axis intersecting the Z axis is defined as an X axis, and an axis intersecting the X axis and the Z axis is defined as a Y axis. One direction along the X axis is defined as a first width direction X1 and the other direction along the X axis is defined as a second width direction X2. One direction along the Y axis is defined as a forward direction Y1 and the other direction along the Y axis is defined as a backward direction Y2. An upward direction along the Z axis is defined as an upward direction Z1 and a downward direction along the Z axis is defined as a downward direction Z2.

### Configuration of a printing apparatus 11

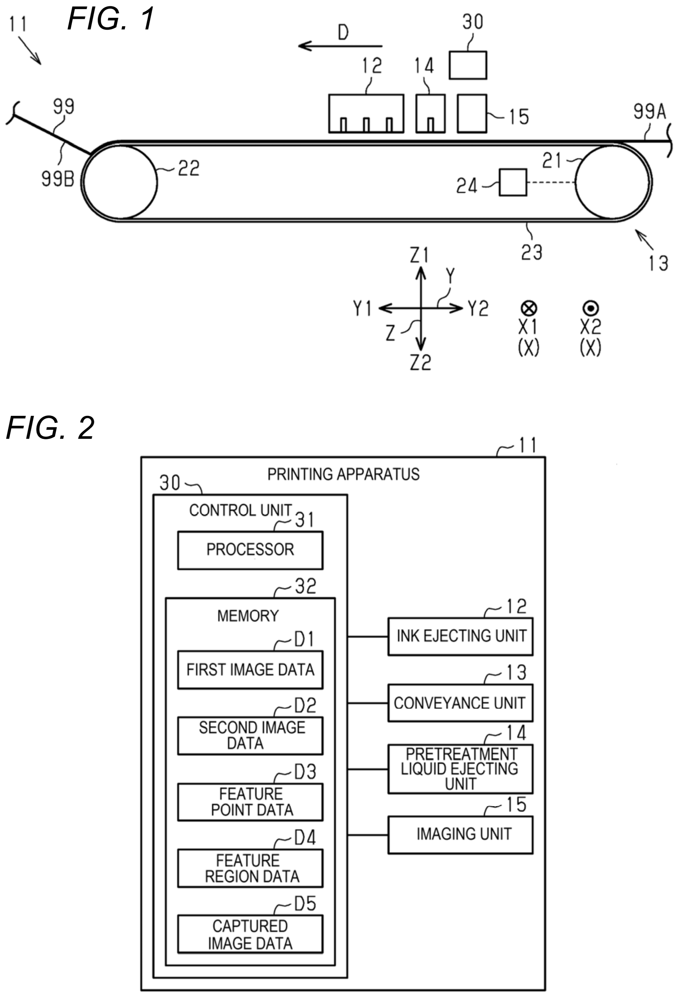

As illustrated in FIG. 1, a printing apparatus 11 may be an inkjet printer that performs printing on a medium 99 by ejecting ink onto the medium 99. The medium 99 includes a first surface 99A and a second surface 99B. The second surface 99B is a surface opposite to the first surface 99A.

The medium 99 may be long. The medium 99 may be let out from, for example, a rolled raw material. The medium 99 is not limited be long and may be a single sheet. The medium 99 may be a fabric.

The printing apparatus 11 includes an ink ejecting unit 12. The ink ejecting unit 12 may be provided in the upward direction Z1 of the medium 99. The ink ejecting unit 12 is configured to perform printing on the medium 99 by ejecting ink onto the medium 99. The ink ejecting unit 12 performs printing on the conveyed medium 99.

The ink ejecting unit 12 may include a head. The ink ejecting unit 12 may be a serial head or may be a line head. The serial head is a head that scans the medium 99 along the X axis. The line head is a head that simultaneously performs recording across the X axis.

The printing apparatus 11 includes a conveyance unit 13. The conveyance unit 13 is configured to convey the medium 99 in a conveyance direction D. The conveyance direction D may be along the Y axis. The conveyance direction D may be in the forward direction Y1.

The conveyance unit 13 may include a first roller 21 and a second roller 22. The first roller 21 is located further upstream than the second roller 22 in the conveyance direction D. The first roller 21 is located further upstream than the ink ejecting unit 12 in the conveyance direction D. The second roller 22 is located further downstream than the ink ejecting unit 12 in the conveyance direction D.

The conveyance unit 13 includes a conveyance belt 23. The conveyance belt 23 is configured to convey the medium 99 in a state of supporting the medium 99. The conveyance belt 23 is wound around the first roller 21 and the second roller 22. When the first roller 21 rotates, the conveyance belt 23 moves along the first roller 21 and the second roller 22.

The conveyance unit 13 includes a roller driving unit 24. The roller driving unit 24 is a driving source for rotating a plurality of rollers. The roller driving unit 24 may be a motor. The roller driving unit 24 is coupled to the first roller 21 but may be coupled to the second roller 22 or may be coupled to both of the first roller 21 and the second roller 22.

The conveyance unit 13 conveys the medium 99 such that a surface facing the ink ejecting unit 12 is a printing surface. Accordingly, when the medium 99 is placed such that the first surface 99A faces the ink ejecting unit 12, the first surface 99A is the printing surface. When the medium 99 is placed such that the second surface 99B faces the ink ejecting unit 12, the second surface 99B is the printing surface.

The printing apparatus 11 includes a pretreatment liquid ejecting unit 14. The pretreatment liquid ejecting unit 14 is provided at a position facing the medium 99. The pretreatment liquid ejecting unit 14 may be provided in the upward direction Z1 of the medium 99. The pretreatment liquid ejecting unit 14 is located further upstream than the ink ejecting unit 12 in the conveyance direction D.

The pretreatment liquid ejecting unit 14 is configured to eject pretreatment liquid onto the medium 99. The pretreatment liquid ejecting unit 14 may include a head. The pretreatment liquid ejecting unit 14 may be a serial head or may be a line head.

The pretreatment liquid may be penetrant. As explained above, the pretreatment liquid ejecting unit 14 ejects the penetrant as the pretreatment liquid. The penetrant promotes permeation of ink. The penetrant may be liquid less easily visually recognized. The penetrant may be colorless liquid.

The printing apparatus 11 includes an imaging unit 15. The imaging unit 15 is provided at a position facing the medium 99. The imaging unit 15 may be provided in the upward direction Z1 of the medium 99. The imaging unit 15 is located further upstream than the ink ejecting unit 12 in the conveyance direction D. The imaging unit 15 is located further upstream than the pretreatment liquid ejecting unit 14 in the conveyance direction D.

The imaging unit 15 is configured to image the medium 99. When the medium 99 is conveyed such that the first surface 99A of the medium 99 faces the imaging unit 15, the imaging unit 15 images the first surface 99A of the medium 99. When the medium 99 is conveyed such that the second surface 99B of the medium 99 faces the imaging unit 15, the imaging unit 15 images the second surface 99B of the medium 99.

The printing apparatus 11 includes a control unit 30. The control unit 30 comprehensively controls the printing apparatus 11. The control unit 30 controls various operations executed in the printing apparatus 11. The control unit 30 controls the ink ejecting unit 12, the conveyance unit 13, the pretreatment liquid ejecting unit 14, and the imaging unit 15.

As illustrated in FIG. 2, the control unit 30 may include one or more computers. The control unit 30 may include one or more processors 31 and one or more memories 32. The processor 31 may be a central processing unit (CPU). The processor 31 is configured to execute processing based on a program stored in the memory 32.

The control unit 30 can be configured as a circuit including α: one or more processors that execute various kinds of processing according to a computer program, β: one or more dedicated hardware circuits that execute at least some of the various kinds of processing, or γ: a combination of α and β. The hardware circuit is, for example, an application specific integrated circuit.

The memory 32 includes a computer-readable medium accessible by a general-purpose or dedicated computer. The memory 32 stores a program code or a command configured to cause the processor 31 to execute processing. The memory 32 is a non-transitory computer-readable medium storing a program but may include a transitory computer-readable medium.

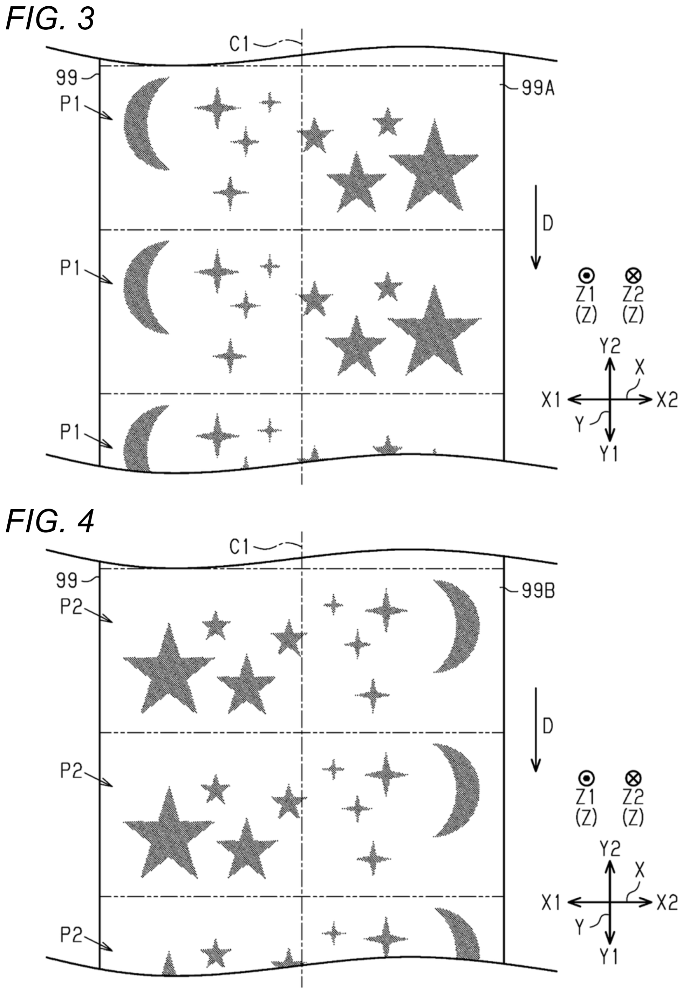

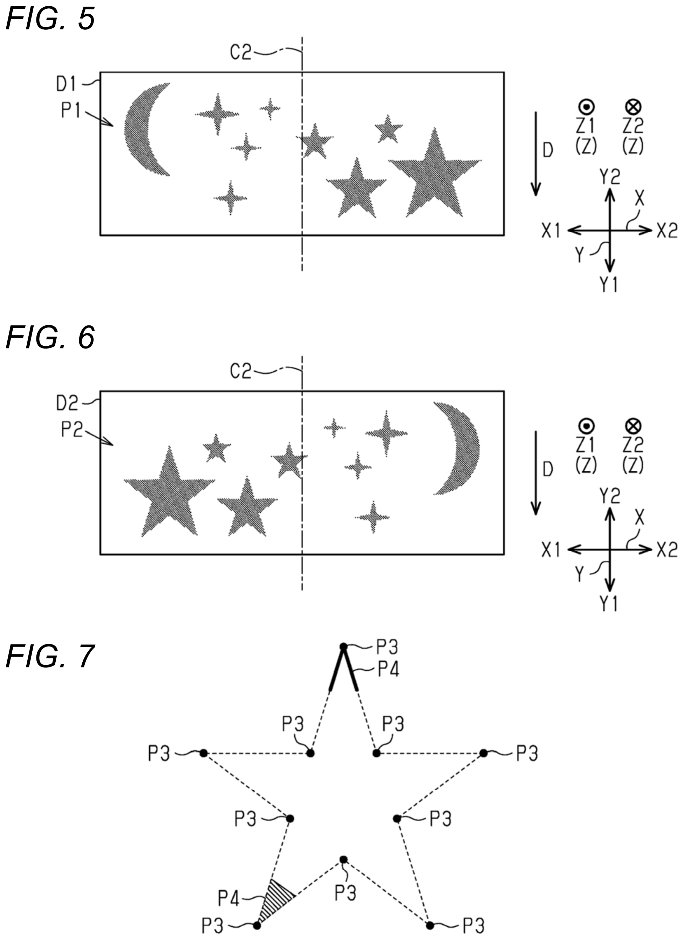

First image data D1 is stored in the memory 32. The first image data D1 is image data of a first image P1 illustrated in FIGS. 3 and 5. The first image data D1 indicates a shape, a color, and the like of the first image P1. The first image P1 is printed on the first surface 99A. The first image data D1 may be CAD data indicating the first image P1 created by software.

Second image data D2 is stored in the memory 32. The second image data D2 is image data of a second image P2 illustrated in FIGS. 4 and 6. The second image data D2 indicates a shape, a color, and the like of the second image P2. The second image P2 is printed on the second surface 99B. The second image data D2 may be CAD data indicating the second image P2 created by software.

Feature point data D3 is stored in the memory 32. The feature point data D3 is coordinate data indicating feature points P3 illustrated in FIG. 7. The feature points P3 are coordinates serving as features of the first image P1 but may be coordinates serving as features of the second image P2.

Feature region data D4 is stored in the memory 32. The feature region data D4 is coordinate data indicating feature regions P4 illustrated in FIG. 7. The feature regions P4 are coordinates of regions including the feature points P3 of the first image P1 but may be coordinates of regions including the feature points P3 of the second image P2. The feature regions P4 are regions to which the pretreatment liquid is ejected.

Captured image data D5 is stored in the memory 32. The captured image data D5 is image data of a captured image. The captured image is captured by the imaging unit 15. The captured image may be an image obtained by imaging the medium 99 from the second surface 99B. In particular, the captured image may be an image obtained by imaging the medium 99 from the second surface 99B in a state in which the first image P1 is printed on the first surface 99A and the second image P2 is not printed on the second surface 99B.

### Type of the medium 99 and printing on the medium 99

As illustrated in FIGS. 3 and 4, in the present embodiment, the printing apparatus 11 performs printing on both of the first surface 99A and the second surface 99B. The printing apparatus 11 prints the first image P1 illustrated in FIG. 3 by ejecting ink onto the first surface 99A and thereafter prints the second image P2 illustrated in FIG. 4 by ejecting the ink onto the second surface 99B.

As illustrated in FIG. 3, the first image P1 is periodically printed on the medium 99. The first image P1 may be periodically printed on the medium 99 to repeatedly appear in the conveyance direction D.

As illustrated in FIG. 4, the second image P2 is periodically printed on the medium 99. The second image P2 may be periodically printed on the medium 99 to repeatedly appear in the conveyance direction D.

As illustrated in FIGS. 3 and 4, the first image P1 and the second image P2 are images inverted on the first surface 99A and the second surface 99B of the medium 99. The first image P1 and the second image P2 are images that are symmetrical in the direction along the X axis. The first image P1 and the second image P2 are images that are symmetrical in the direction along the X axis with respect to a first center line C1 extending along the Y axis. The first center line C1 may or may not be the center line of the medium 99. As explained above, the second image P2 on the second surface 99B is printed in a region corresponding to the first image P1 on the first surface 99A.

As illustrated in FIGS. 5 and 6, the first image data D1 and the second image data D2 are image data that are symmetrical in the direction along the X axis. The first image data D1 and the second image data D2 are image data that are symmetrical in the direction along the X axis with respect to a second center line C2 extending along the Y axis. The second center line C2 may or may not be the center line of the first image data D1. The second center line C2 may be located at the same position as or may be located at a position different from the position of the first center line C1.

As illustrated in FIG. 7, the feature points P3 may be characteristic parts in the first image P1. The feature points P3 may be included in a printing region to which the ink is ejected as the first image P1. The feature points P3 may be corners in the first image P1. The feature points P3 may be allocated to the first image data D1.

The feature regions P4 are regions including the feature points P3 in the first image P1. The feature regions P4 are regions where the feature points P3 can be identified in the first image P1. The feature regions P4 may be edges including the feature points P3 in the first image P1. The edges are boundaries between the printing region to which the ink is ejected as the first image P1 and the non-printing region to which the ink is not ejected as the first image P1. The feature regions P4 are regions to which the pretreatment liquid is ejected. The feature regions P4 may be allocated to the first image data D1.

The pretreatment liquid ejecting unit 14 is configured to eject the pretreatment liquid onto the medium 99 when the medium 99 is placed to face the first surface 99A. That is, the pretreatment liquid ejecting unit 14 ejects the pretreatment liquid onto the first surface 99A. The pretreatment liquid ejecting unit 14 ejects the pretreatment liquid onto the first surface 99A before the ink ejecting unit 12 ejects the ink onto the first surface 99A.

In particular, the pretreatment liquid ejecting unit 14 is configured to eject the pretreatment liquid from the first surface 99A to the feature regions P4. For this reason, in the feature regions P4 of the medium 99, when the ink is ejected after the pretreatment liquid has been ejected from the first surface 99A, permeation of the ink from the first surface 99A to the second surface 99B is promoted.

The imaging unit 15 is capable of imaging the medium 99 from the second surface 99B in a state in which printing is performed on the first surface 99A after the pretreatment liquid has been ejected from the first surface 99A to the feature regions P4. That is, the imaging unit 15 is capable of imaging, by imaging the second surface 99B, the medium 99 through the first image P1 printed on the first surface 99A. In this case, printing is not performed on the second surface 99B of the medium 99. The imaging unit 15 can identifiably image the feature regions P4 because the ink ejected from the first surface 99A permeates to the second surface 99B in the feature regions P4. The imaging unit 15 can identifiably image the feature points P3 corresponding to the feature regions P4.

### Feature point setting processing

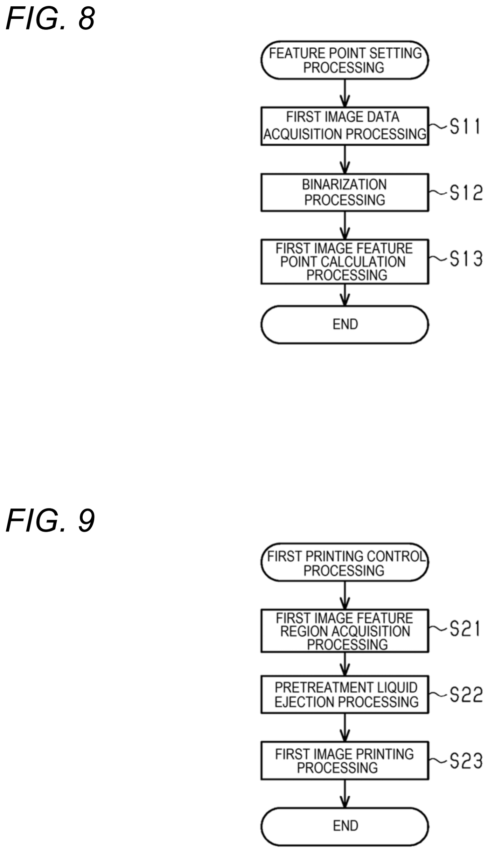

Here, feature point setting processing is explained with reference to FIG. 8. The feature point setting processing is executed by the control unit 30 when the feature points P3 of an image to be printed on the medium 99 is set. The feature point setting processing may be executed by the control unit 30 based on an instruction of a user. The subsequent processing is explained as processing executed by the control unit 30 but may be processing executed by the processor 31.

As illustrated in FIG. 8, in step S11, the control unit 30 executes first image data acquisition processing. In this processing, the control unit 30 reads the first image data D1 stored in the memory 32. Accordingly, the control unit 30 acquires the first image data D1.

In step S12, the control unit 30 executes binarization processing. In this processing, the control unit 30 binarizes the first image data D1. Accordingly, the control unit 30 is capable of recognizing a printing region of the first image P1.

In step S13, the control unit 30 executes first image feature point calculation processing. In this processing, the control unit 30 calculates the feature points P3 of the first image P1 based on the binarized first image data D1. The control unit 30 may calculate corners of the printing region of the first image P1 as the feature points P3 of the first image P1. The control unit 30 stores the feature point data D3 indicating the feature points P3 of the first image P1 in the memory 32. As explained above, the control unit 30 sets the feature points P3 in the first image P1.

The control unit 30 calculates the feature regions P4 of the first image P1 corresponding to the feature points P3 of the first image P1. The control unit 30 stores the feature region data D4 indicating the feature regions P4 of the first image P1 in the memory 32. As explained above, the control unit 30 sets the feature regions P4 in the first image P1.

The control unit 30 may calculate the feature points P3 themselves of the first image P1 as the feature regions P4 of the first image P1. The control unit 30 may calculate, as the feature regions P4 of the first image P1, regions including the feature points P3 of the first image P1.

As a specific example, the control unit 30 may calculate, as the feature regions P4 of the first image P1, corners of the printing region to which the ink is ejected as the first image P1. The control unit 30 may calculate, as the feature regions P4 of the first image P1, regions including the corners of the printing region of the first image P1. The control unit 30 may calculate, as the feature regions P4 of the first image P1, the corners of the printing region of the first image P1 and edges of the printing region of the first image P1 continuous from the corners of the printing region. The control unit 30 may calculate, as the feature regions P4 of the first image P1, regions surrounded by the corners of the printing region of the first image P1 and the edges of the printing region of the first image P1 continuous from the corners of the printing region.

### First printing control processing

Subsequently, first printing control processing is explained with reference to FIG. 9. The first printing control processing is executed by the control unit 30 when the first image P1 is printed on the first surface 99A. The first printing control processing is executed by the control unit 30 based on an instruction of the user in a state in which the medium 99 is placed on the conveyance unit 13 such that the first surface 99A faces the ink ejecting unit 12.

As illustrated in FIG. 9, in step S21, the control unit 30 executes first image feature region acquisition processing. In this processing, the control unit 30 reads the feature region data D4 of the first image P1 from the memory 32. Accordingly, the control unit 30 acquires the feature regions P4 of the first image P1.

In step S22, the control unit 30 executes pretreatment liquid ejection processing. In this processing, the control unit 30 controls the pretreatment liquid ejecting unit 14 to eject the pretreatment liquid to the feature regions P4 of the first image P1. As explained above, the control unit 30 causes the pretreatment liquid ejecting unit 14 to eject the pretreatment liquid to the feature regions P4 of the first surface 99A corresponding to the feature points P3 of the first image P1.

In step S23, the control unit 30 executes first image printing processing. In this processing, the control unit 30 controls the ink ejecting unit 12 to print the first image P1 on the first surface 99A by ejecting the ink onto the first surface 99A based on the first image data D1.

As explained above, the control unit 30 causes the ink ejecting unit 12 to eject the ink onto the first surface 99A of the medium 99, to the feature regions P4 of which the pretreatment liquid has been ejected, to thereby print the first image P1 on the first surface 99A.

In the feature regions P4, the ink is ejected after penetrant serving as the pretreatment liquid has been ejected from the first surface 99A. Accordingly, it is possible to promote permeation of the ink from the first surface 99A side to the second surface 99B side in the feature regions P4. For this reason, it is easy to recognize the feature regions P4 from the second surface 99B with the ink ejected from the first surface 99A.

### Second printing control processing

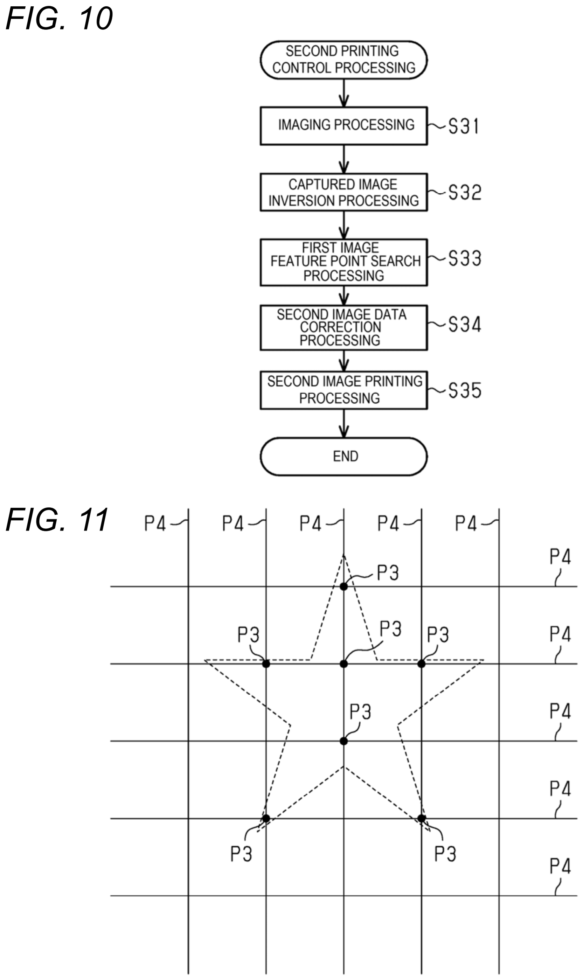

Subsequently, second printing control processing is explained with reference to FIG. 10. The second printing control processing is executed by the control unit 30 when the second image P2 is printed on the second surface 99B. The second printing control processing is executed by the control unit 30 based on an instruction of the user in a state in which the medium 99 is placed on the conveyance unit 13 such that the second surface 99B faces the ink ejecting unit 12. The second printing control processing is executed by the control unit 30 after the execution of the first printing control processing.

As illustrated in FIG. 10, in step S31, the control unit 30 executes imaging processing. In this processing, the control unit 30 controls the imaging unit 15 to image the medium 99 from the second surface 99B. The control unit 30 stores the captured image data D5 of the second surface 99B in the memory 32.

As explained above, the control unit 30 causes the imaging unit 15 to image, from the second surface 99B, the medium 99 on which the first image P1 is printed from the first surface 99A after the pretreatment liquid has been ejected from the first surface 99A to the feature regions P4.

In step S32, the control unit 30 executes captured image inversion processing. In this processing, the control unit 30 inverts the captured image data D5 in the direction along the X axis. Accordingly, the control unit 30 generates the captured image data D5 corresponding to the first surface 99A based on the captured image data D5 of the second surface 99B. That is, the control unit 30 acquires the captured image data D5 of the first surface 99A from the captured image data D5 of the second surface 99B.

In step S33, the control unit 30 executes first image feature point search processing. In this processing, the control unit 30 specifies, based on an inverted captured image, the feature regions P4 to which the pretreatment liquid has been ejected on the first surface 99A. Specifically, the control unit 30 specifies, as the feature regions P4, regions where the ink ejected from the first surface 99A has permeated to the second surface 99B in the captured image. The control unit 30 acquires the feature points P3 from the feature regions P4 specified from the captured image.

In step S34, the control unit 30 executes second image data correction processing. In this processing, the control unit 30 acquires the feature points P3 of the first image P1 stored in the memory 32. The control unit 30 corrects the first image data D1 as first corrected image data based on the feature points P3 acquired from the captured image and the feature points P3 of the first image P1 acquired from the memory 32. The control unit 30 may correct the first image data D1 as the first corrected image data based on the deviation between the feature points P3 acquired from the captured image and the feature points P3 of the first image P1 acquired from the memory 32.

The control unit 30 inverts the first corrected image data in the direction along the X axis. Accordingly, the control unit 30 generates second corrected image data based on the first corrected image data. That is, the control unit 30 acquires the second corrected image data from the first corrected image data. The control unit 30 stores the second corrected image data in the memory 32.

As explained above, the control unit 30 corrects, based on the feature points P3 of the captured image and the feature points P3 of the first image P1, the second image P2 to be printed on the second surface 99B. That is, the control unit 30 acquires, based on the feature points P3 of the captured image and the feature points P3 of the first image P1, the second corrected image data to be printed on the second surface 99B.

In step S35, the control unit 30 executes second image printing processing. In this processing, the control unit 30 controls the ink ejecting unit 12 to print the second image P2 on the second surface 99B by ejecting the ink onto the second surface 99B based on the second corrected image data.

As explained above, the control unit 30 causes the ink ejecting unit 12 to eject the ink onto the second surface 99B of the medium 99, onto the first surface 99A of which the pretreatment liquid has been ejected and on the first surface 99A of which the first image P1 has been printed, to thereby print a second corrected image.

### Action and effects of the first embodiment

Action and effects of the first embodiment are explained.
(1-1) The control unit 30 causes the pretreatment liquid ejecting unit 14 to eject the pretreatment liquid to the feature regions P4 of the first surface 99A corresponding to the feature points P3 of the first image P1 and causes the ink ejecting unit 12 to eject the ink to the first surface 99A to thereby print the first image P1 on the first surface 99A. The control unit 30 corrects, based on the captured image obtained by imaging the medium 99, on which the first image P1 is printed, from the second surface 99B and the feature points P3 of the first image P1, the second image P2 to be printed on the second surface 99B. With this configuration, it is possible to recognize, based on the captured image obtained by imaging the medium 99 from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.
(1-2) The control unit 30 sets the feature points P3 in the first image P1. With this configuration, it is possible to set the feature points P3 as intended according to the first image P1.
(1-3) The pretreatment liquid ejecting unit 14 ejects, as the pretreatment liquid, the penetrant that promotes permeation of the ink. With this configuration, the ink ejected to the feature regions P4 easily permeates from the first surface 99A to the second surface 99B. Accordingly, it is easy to recognize, based on the captured image obtained by imaging the medium 99 captured from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.

### Second Embodiment

Subsequently, a second embodiment is explained. In the following explanation, redundant explanation is omitted or simplified about the same configurations as the configurations in the embodiment explained above, and configurations different from the configurations in the embodiment explained above are explained.

In a second embodiment, the feature points P3 only have to be included in the printing region of the first image P1. The feature points P3 may not be characteristic parts of the first image P1. The feature regions P4 may be included in both of the printing region of the first image P1 and the non-printing region of the first image P1.

As illustrated in FIG. 11, the feature regions P4 may have a lattice shape. The feature points P3 may be points where the feature regions P4 in the printing region of the first image P1 intersect. The feature points P3 may not be the corners or the edges of the first image P1.

### Action and Effects of the second embodiment

Action and effects of the second embodiment are explained.
(2-1) The feature regions P4 may be included in both of the printing region of the first image P1 and the non-printing region of the first image P1. With this configuration, in the feature regions P4 set in the non-printing region of the first image P1, the pretreatment liquid is ejected from the first surface 99A but the ink is not ejected. For this reason, even if the pretreatment liquid is ejected to the feature regions P4 set in the non-printing region of the first image P1, the ink does not permeate to the second surface 99B. In addition, the pretreatment liquid is penetrant that is less easily visually recognize. Even if the pretreatment liquid itself permeates to the second surface 99B, it is difficult to visually recognize the pretreatment liquid. For this reason, it is possible to suppress deterioration in the printing quality on the second surface 99B.

### Third Embodiment

Subsequently, a third embodiment is explained.

In the third embodiment, the imaging unit 15 may be an infrared camera. That is, the imaging unit 15 may image the medium 99 using infrared rays. The imaging unit 15 may include a filter that transmits light in a predetermined frequency band.

The pretreatment liquid ejecting unit 14 may eject white ink as the pretreatment liquid. The pretreatment liquid ejecting unit 14 may eject white ink of dye ink as the pretreatment liquid. The white ink reflects infrared light. The white ink may contain, for example, titanium oxide, zinc oxide, lithopone, or white lead.

The feature points P3 of the first image P1 and the feature regions P4 of the first image P1 are set in the printing region of the first image P1. The feature points P3 of the first image P1 and the feature regions P4 of the first image P1 are not set in the non-printing region of the first image P1.

The ink ejecting unit 12 may eject dye ink as ink for printing an image. The dye ink such as acidic ink and reactive ink transmits infrared light. When the white ink serving as the pretreatment liquid is the white ink of the dye ink, the feature points P3 of the first image P1 and the feature regions P4 of the first image P1 may be set in a region not including the white ink in the printing region of the first image P1.

In step S13 in FIG. 8, the control unit 30 sets the feature points P3 of the first image P1 and the feature regions P4 of the first image P1 in the printing region of the first image P1. In step S22 in FIG. 9, the control unit 30 ejects, as the pretreatment liquid, the white ink of the dye ink to the feature regions P4 of the first image P1 set in the printing region of the first image P1.

In the feature regions P4, the infrared light is reflected by ejecting the white ink as the pretreatment liquid between the first surface 99A and the ink of the first image P1. In regions other than the feature regions P4, the white ink is not ejected between the first surface 99A and the ink of the first image P1 and the infrared light is not reflected. Accordingly, in step S33 in FIG. 10, the control unit 30 can recognize, based on a captured image, the feature regions P4 of the first image P1 that reflects infrared rays.

### Action and effects of the third embodiment

Action and effects of the third embodiment are explained.
(3-1) The imaging unit 15 images the medium 99 using infrared rays. With this configuration, by using the infrared rays, it is possible to capture a captured image including a situation not only on the second surface 99B but also on the first surface 99A. For this reason, it is easy to recognize, based on the captured image obtained by imaging the medium 99 from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.
(3-2) The pretreatment liquid ejecting unit 14 ejects the white ink as the pretreatment liquid. With this configuration, by ejecting, as the pretreatment liquid, the white ink that reflects infrared rays, it is easy to recognize, based on a captured image obtained by imaging the medium 99 from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.
(3-3) The control unit 30 sets the feature points P3 of the first image P1 in the region not including the white ink in the first image P1. The pretreatment liquid ejecting unit 14 ejects, as the pretreatment liquid, the white ink to the feature regions P4 not including the white ink in the first image P1. With this configuration, the white ink is ejected, as the pretreatment liquid, to the feature regions P4 not including the white ink in the first image P1. For this reason, it is easy to recognize, based on the captured image obtained by imaging the medium 99 from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.

### Fourth Embodiment

Subsequently, a fourth embodiment is explained.

In the fourth embodiment, the imaging unit 15 may image the medium 99 using infrared rays. The pretreatment liquid ejecting unit 14 may eject white ink of pigment ink as the pretreatment liquid. The black ink of the pigment ink absorbs infrared light. Ink other than the black ink of the pigment ink reflects infrared light compared with the black ink of the pigment ink.

The feature points P3 of the first image P1 and the feature regions P4 of the first image P1 are set in the printing region of the first image P1. The feature points P3 of the first image P1 and the feature regions P4 of the first image P1 are not set in the non-printing region of the first image P1.

The ink ejecting unit 12 may the eject pigment ink as ink for printing an image. In such a case, the feature points P3 of the first image P1 and the feature regions P4 of the first image P1 may be set in a region to which the black ink is ejected as the first image P1 in the printing region of the first image P1. As explained above, in the feature regions P4 of the first image P1, white ink is ejected as the pretreatment liquid to be adjacent to the region to which the black ink is ejected as the first image P1.

In step S13 in FIG. 8, the control unit 30 sets the feature points P3 of the first image P1 and the feature regions P4 of the first image P1 in the region to which the black ink is ejected in the first image P1. As explained above, the feature points P3 of the first image P1 and the feature regions P4 of the first image P1 are set in the region to which the black ink is ejected in the printing region of the first image P1.

In step S22 in FIG. 9, the control unit 30 ejects, as the pretreatment liquid, the white ink of the pigment ink to the feature regions P4 of the first image P1 set in the region to which the black ink is ejected in the printing region of the first image P1.

In the feature regions P4, the infrared light is reflected by ejecting the white ink as the pretreatment liquid between the first surface 99A and the ink of the first image P1. In regions adjacent to the feature regions P4, infrared light is absorbed by ejecting the black ink to the first surface 99A as the first image P1. Accordingly, in step S33 in FIG. 10, the control unit 30 can recognize, based on a captured image, the feature regions P4 of the first image P1 that reflects infrared rays.

### Action and effects of the fourth embodiment

Action and effects of the fourth embodiment are explained.
(4-1) The control unit 30 sets the feature points P3 of the first image P1 in the region to which the black ink is ejected in the first image P1. The pretreatment liquid ejecting unit 14 ejects, as the pretreatment liquid, the white ink to the feature regions P4 to which the black ink is ejected in the first image P1. With this configuration, the white ink is ejected, as the pretreatment liquid, to the feature regions P4 to which the black ink that absorbs infrared rays is ejected in the first image P1. For this reason, it is easy to recognize, based on the captured image obtained by imaging the medium 99 from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.

### Fifth Embodiment

Subsequently, a fifth embodiment is explained.

In the fifth embodiment, an ejection amount of the pretreatment liquid ejected from the first surface 99A may be adjusted based on a type of the medium 99. The ejection amount of the pretreatment liquid ejected from the first surface 99A may be adjusted based on the thickness of the medium 99. The ejection amount of the pretreatment liquid ejected from the first surface 99A may be adjusted based on the material of the medium 99.

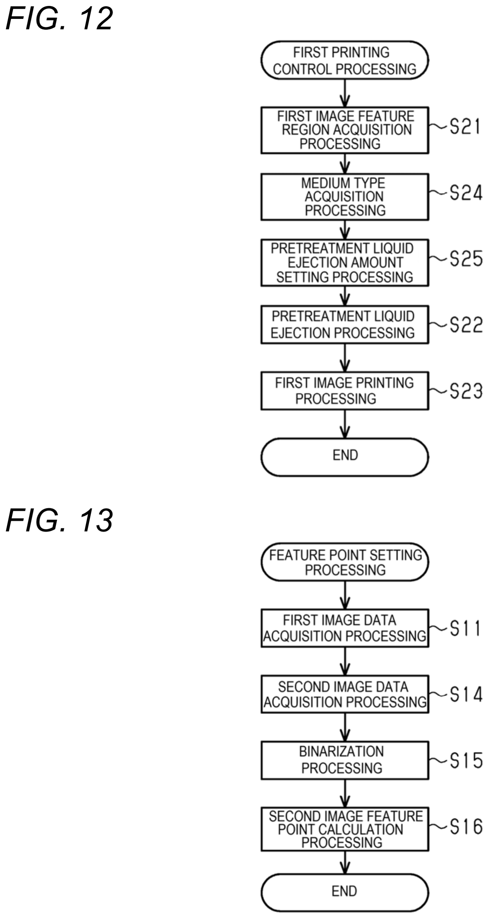

As illustrated in FIG. 12, when step S21 ends, the control unit 30 shifts processing to step S24. In step S24, the control unit 30 executes medium type acquisition processing. In this processing, the control unit 30 acquires the type of the medium 99. The control unit 30 may acquire the thickness of the medium 99 corresponding to the type of the medium 99. The control unit 30 may acquire the material of the medium 99 corresponding to the type of the medium 99.

The control unit 30 acquires the type of the medium 99 according to a setting instruction by a user. The control unit 30 may acquire the type of the medium 99 according to a signal from a medium detection unit that detects the type of the medium 99.

In step S25, the control unit 30 executes pretreatment liquid ejection amount setting processing. In this processing, the control unit 30 reads an ejection amount of the pretreatment liquid corresponding to the type of the medium 99 from the memory 32. The control unit 30 reads an ejection amount of the pretreatment liquid corresponding to the thickness of the medium 99 from the memory 32. The control unit 30 reads an ejection amount of the pretreatment liquid corresponding to the material of the medium 99 from the memory 32. Accordingly, the control unit 30 acquires the ejection amount of the pretreatment liquid.

In step S22, the control unit 30 controls, based on the ejection amount of the pretreatment liquid, the pretreatment liquid ejecting unit 14 to eject the pretreatment liquid to the feature regions P4 of the first image P1. As explained above, the control unit 30 adjusts, based on the type of the medium 99, the ejection amount of the pretreatment liquid to be ejected from the first surface 99A. The control unit 30 adjusts, based on the thickness of the medium 99, the ejection amount of the pretreatment liquid to be ejected from the first surface 99A. As explained above, the control unit 30 adjusts, based on the material of the medium 99, the ejection amount of the pretreatment liquid to be ejected from the first surface 99A.

### Action and effects of the fifth embodiment

Action and effects of the fifth embodiment are explained.
(5-1) The control unit 30 adjusts the ejection amount of the pretreatment liquid based on the type of the medium 99. With this configuration, by adjusting the ejection amount of the pretreatment liquid according to the type of the medium 99, it is easy to recognize, based on a captured image obtained by imaging the medium 99 from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.
(5-2) The control unit 30 adjusts the ejection amount of the pretreatment liquid based on the thickness of the medium 99. With this configuration, by adjusting the ejection amount of the pretreatment liquid according to the thickness of the medium 99, it is easy to recognize, based on a captured image obtained by imaging the medium 99 from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.
(5-3) The control unit 30 adjusts the ejection amount of the pretreatment liquid based on the material of the medium 99. With this configuration, by adjusting the ejection amount of the pretreatment liquid according to the material of the medium 99, it is easy to recognize, based on a captured image obtained by imaging the medium 99 from the second surface 99B, the feature points P3 of the first image P1 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.

### Sixth Embodiment

Subsequently, a sixth embodiment is explained.

In the sixth embodiment, the feature regions P4 of the first image P1 may be set based on the feature points P3 of the second image P2 rather than the feature points P3 of the first image P1.

### Feature point setting processing

As illustrated in FIG. 13, in feature point setting processing, when step S11 ends, the control unit 30 shifts the processing to step S14. In step S14, the control unit 30 executes second image data acquisition processing. In this processing, the control unit 30 inverts the first image data D1 in the direction along the X axis with respect to the second center line C2 extending along the Y axis. Accordingly, the control unit 30 generates the second image data D2 based on the first image data D1. That is, the control unit 30 acquires the second image data D2 from the first image data D1. The control unit 30 stores the second image data D2 in the memory 32.

In step S15, the control unit 30 executes binarization processing. In this processing, the control unit 30 binarizes the second image data D2 as in step S12 in FIG. 8. Accordingly, the control unit 30 is capable of recognizing the printing region of the second image P2.

In step S16, the control unit 30 executes second image feature point calculation processing. In this processing, the control unit 30 calculates the feature points P3 of the second image P2 based on the binarized second image data D2 as in step S13 in FIG. 8. The control unit 30 stores the feature point data D3 indicating the feature points P3 of the second image P2 in the memory 32. As explained above, the control unit 30 sets the feature points P3 in the second image P2.

The control unit 30 calculates the feature regions P4 of the second image P2 corresponding to the feature points P3 of the second image P2. The control unit 30 stores the feature region data D4 indicating the feature regions P4 of the second image P2 in the memory 32. As explained above, the control unit 30 sets the feature regions P4 in the second image P2.

### First printing control processing

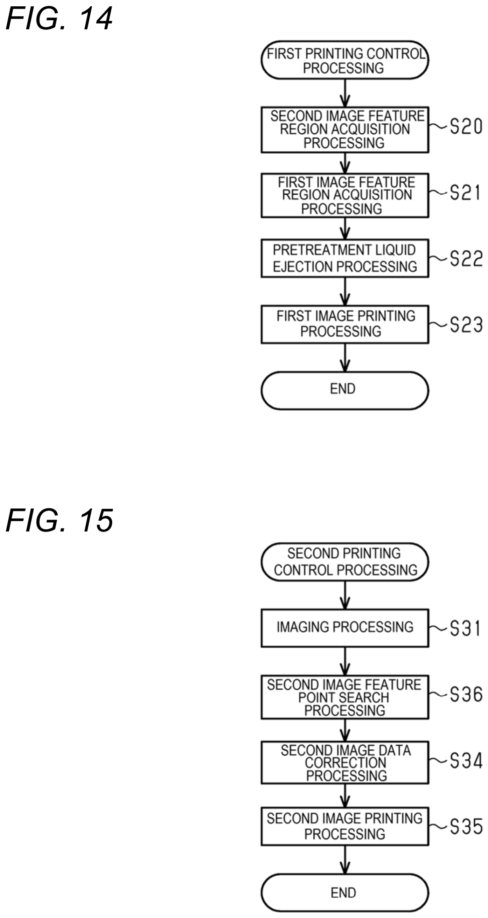

As illustrated in FIG. 14, in first printing control processing, in step S20, the control unit 30 executes second image feature region acquisition processing. In this processing, the control unit 30 reads the feature region data D4 of the second image P2 from the memory 32. Accordingly, the control unit 30 acquires the feature regions P4 of the second image P2.

In step S21, the control unit 30 executes first image feature region acquisition processing. In this processing, the control unit 30 inverts the feature regions P4 of the second image P2 in the direction along the X axis with respect to the second center line C2 extending along the Y axis. Accordingly, the control unit 30 generates the feature regions P4 of the first image P1 based on the feature regions P4 of the second image P2. That is, the control unit 30 acquires the feature regions P4 of the first image P1 from the feature regions P4 of the second image P2. The control unit 30 stores the feature region data D4 of the first image P1 in the memory 32. Accordingly, in step S22, the control unit 30 causes the pretreatment liquid ejecting unit 14 to eject the pretreatment liquid to the feature regions P4 of the first surface 99A corresponding to the feature points P3 of the second image P2.

### Second printing control processing

As illustrated in FIG. 15, in the second printing control processing, when step S31 ends, the control unit 30 shifts the process to step S36. In step S36, the control unit 30 executes second image feature point search processing. In this processing, as in step S33 in FIG. 10, the control unit 30 specifies, based on a captured image, the feature regions P4 to which the pretreatment liquid has been ejected on the first surface 99A. The control unit 30 acquires the feature points P3 from the feature regions P4 specified from the captured image.

Accordingly, in step S34, the control unit 30 corrects, based on the captured image and the feature points P3 of the second image P2, as second corrected image, the second image P2 to be printed on the second surface 99B. That is, the control unit 30 acquires, based on the feature points P3 of the captured image and the feature points P3 of the second image P2, second corrected image data to be printed on the second surface 99B.

### Action and effects of the sixth embodiment

Action and effects of the sixth embodiment are explained.
(6-1) The control unit 30 causes the pretreatment liquid ejecting unit 14 to eject the pretreatment liquid to the feature regions P4 of the first surface 99A corresponding to the feature points P3 of the second image P2 and causes the ink ejecting unit 12 to eject the ink onto the first surface 99A to thereby print the first image P1 on the first surface 99A. The control unit 30 corrects, based on a captured image obtained by capturing the medium 99, on which the first image P1 is printed, from the second surface 99B and the feature points P3 of the second image P2, the second image P2 to be printed on the second surface 99B. With this configuration, it is possible to recognize, based on the captured image obtained by imaging the medium 99 from the second surface 99B, the feature points P3 of the second image P2 corresponding to the feature regions P4 of the first surface 99A onto which the pretreatment liquid has been ejected. Accordingly, it is possible to improve the accuracy of correcting the second image P2 to be printed on the second surface 99B. Therefore, it is possible to improve the printing accuracy of the first image P1 and the second image P2.

### Seventh Embodiment

Subsequently, a seventh embodiment is explained.

In the seventh embodiment, the medium 99 may be, for example, jacquard fabric. The jacquard fabric is fabric woven to form a pattern. The pattern may be formed by unevenness caused by weaving. In the medium 99, a pattern may be provided at least on the first surface 99A.

In the seventh embodiment, the first image P1 may be printed to correspond to the pattern on the first surface 99A. In the seventh embodiment, the imaging unit 15 may image the first surface 99A before the first image P1 is printed on the first surface 99A. Accordingly, the pattern on the first surface 99A is imaged.

In the seventh embodiment, the control unit 30 may correct the first image data D1 based on pattern image data obtained by imaging the first surface 99A and cause the ink ejecting unit 12 to print the first image P1 on the first surface 99A based on corrected first corrected image data. In this case, the control unit 30 may correct the feature regions P4 of the first image P1 corresponding to the first image data D1 based on the pattern image data obtained by imaging the first surface 99A and cause the pretreatment liquid ejecting unit 14 to eject the pretreatment liquid to the corrected feature regions P4.

### First printing control processing

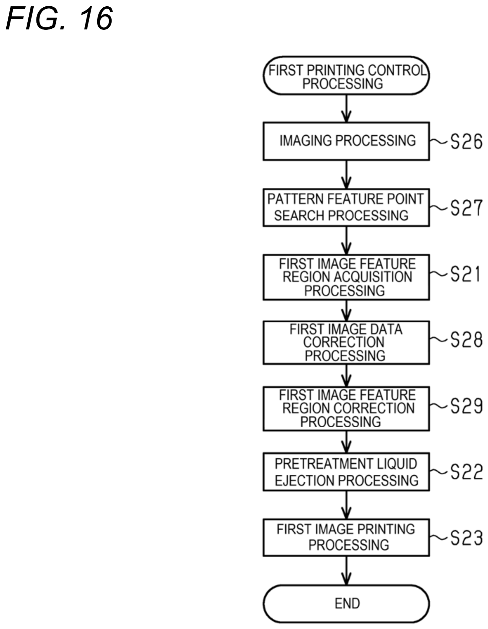

As illustrated in FIG. 16, in the first printing control processing, the control unit 30 executes imaging processing in step S26. In this processing, the control unit 30 controls the imaging unit 15 to image the medium 99 from the first surface 99A. As explained above, the control unit 30 causes the imaging unit 15 to image the medium 99, onto the first surface 99A of which the pretreatment liquid and the ink have not been ejected, from the first surface 99A. The control unit 30 stores the pattern image data of the first surface 99A in the memory 32.

In step S27, the control unit 30 executes pattern feature point search processing. In this processing, the control unit 30 specifies a pattern region on the first surface 99A based on the pattern image data of the first surface 99A. The control unit 30 acquires the feature points P3 of a pattern image based on the pattern region specified from the pattern image data. The feature points P3 of the pattern image may be corners of the pattern region.

When step S21 ends, the control unit 30 shifts the processing to step S28. In step S28, the control unit 30 executes first image data correction processing. In this processing, the control unit 30 acquires the feature points P3 of the first image P1 stored in the memory 32. The control unit 30 corrects the first image data D1 as the first corrected image data based on the feature points P3 of the pattern image and the feature points P3 of the first image P1 acquired from the memory 32. The control unit 30 may correct the first image data D1 as the first corrected image data based on the deviation between the feature points P3 of the pattern image and the feature points P3 of the first image P1.

In step S29, the control unit 30 executes first image feature region correction processing. In this processing, the control unit 30 corrects the feature region data D4 of the first image P1 based on the feature points P3 of the pattern image and the feature points P3 of the first image P1. The control unit 30 may correct the feature region data D4 of the first image P1 based on the deviation between the feature points P3 of the pattern image and the feature points P3 of the first image P1.

Accordingly, in step S22, the control unit 30 ejects the pretreatment liquid to the feature region P4 of the first surface 99A based on the feature region data D4 corrected to correspond to the pattern of the first surface 99A. In step S23, the control unit 30 prints the first image P1 on the first surface 99A based on the first corrected image data corrected to correspond to the pattern of the first surface 99A.

### Action and effects of the seventh embodiment

The action and effects of the seventh embodiment are explained.
(7-1) The control unit 30 acquires a pattern image on the first surface 99A by imaging, from the first surface 99A, the medium 99 onto which the pretreatment liquid and the ink have not been ejected. The control unit 30 corrects the feature region P4 of the first image P1 and the first image P1 to correspond to a pattern on the first surface 99A. With this configuration, it is possible to eject the pretreatment liquid to the feature region P4 corresponding to the pattern and it is possible to print the first image P1 onto the first surface 99A to correspond to the pattern. Therefore, it is possible to improve the printing accuracy of the first image P1 and the second image P2.

### Modifications

The present embodiment can be changed and implemented as explained below. The present embodiment and the following modifications can be implemented in combination with each other as long as no technical inconsistencies are involved.

The control unit 30 may prepare the medium 99 for a test, on the first surface 99A of which the first image P1 is printed, in advance and acquire the feature points P3 of the first image P1 based on a captured image obtained by the imaging unit 15 imaging the medium 99 for the test from the first surface 99A. The control unit 30 may not acquire the feature points P3 of the first image P1 based on the first image data D1.

The control unit 30 may prepare the medium 99 for the test, on the second surface 99B of which the second image P2 is printed, in advance and acquire the feature points P3 of the second image P2 based on a captured image obtained by the imaging unit 15 imaging the medium 99 for the test from the second surface 99B. The control unit 30 may not acquire the feature points P3 of the second image P2 based on the second image data D2.

The pretreatment liquid may be ink containing a fluorescent pigment. The pretreatment liquid may be black ink of pigment ink. In this case, the feature regions P4 may be set in a region to which white ink of pigment ink is ejected in the printing region of the first image P1.

The control unit 30 may calculate the edges of the printing region of the first image P1 as the feature points P3 of the first image P1. The control unit 30 may calculate, as the feature points P3 of the first image P1, points other than the corners and the edges of the printing region of the first image P1.

If the first image P1 and the second image P2 are images printed at corresponding positions on the first surface 99A and the second surface 99B, the first image P1 and the second image P2 do not have to be images that are symmetrical on the first surface 99A and the second surface 99B.

The ink ejecting unit 12 may be configured as at least one head. The ink ejecting unit 12 and the pretreatment liquid ejecting unit 14 may be configured as one head if the ink and the pretreatment liquid are ejected from different nozzles.

The printing apparatus 11 may include a plurality of ink ejecting units 12. The printing apparatus 11 may include a first ink ejecting unit that prints the first image P1 on the first surface 99A and a second ink ejecting unit that prints the second image P2 on the second surface 99B. The first ink ejecting unit is provided further upstream than the second ink ejecting unit. In such a case, the medium 99 may not be placed again when the first image P1 is printed on the first surface 99A and when the second image P2 is printed on the second surface 99B.

The printing apparatus 11 may include a plurality of imaging units 15. The printing apparatus 11 may include a first imaging unit that images the first surface 99A and a second imaging unit that images the second surface 99B. In this case, the first imaging unit is provided further upstream than the first ink ejecting unit. The second imaging unit is provided further downstream than the first ink ejecting unit and further upstream than the second ink ejecting unit.

The medium 99 is not limited to the roll body. The medium 99 may be paper, a film or a sheet made of resin, a composite film of resin and metal, a laminated film, woven fabric, nonwoven fabric, a metal foil, a metal film, a ceramic sheet, clothing, or the like.

Any liquid can be optionally selected if the liquid adheres to the medium 99 to enable recording on the medium 99. For example, the ink includes ink in which particles of a functional material formed of a solid matter such as pigment or metal particles are dissolved, dispersed, or mixed in a solvent and includes various compositions such as aqueous ink, oilbased ink, gel ink, and hot melt ink.

The expression "at least any one of" used in the present specification means one or more of desired choices. As an example, if the number of choices is two, the expression "at least any one of" used in the present specification means only one choice or both of the two choices. As another example, if the number of choices is three or more, the expression "at least any one of" used in the present specification means only one choice or a combination of any two or more choices.

### Appendices

Technical ideas grasped from the embodiments and the modifications explained above and action effects of the technical ideas are described below. The technical ideas and the action effects thereof can be combined with each other as long as no technical inconsistencies are involved.
[1] A printing apparatus including: a pretreatment liquid ejecting unit configured to eject pretreatment liquid onto a medium; an ink ejecting unit configured to eject ink onto the medium to thereby print an image on the medium; an imaging unit configured to image the medium; and a control unit, wherein the control unit executes: causing the pretreatment liquid ejecting unit to eject the pretreatment liquid to a feature region of a first surface of the medium corresponding to a feature point of a first image or a feature point of a second image; causing the ink ejecting unit to eject the ink onto the first surface of the medium, onto the feature region of which the pretreatment liquid was ejected, to thereby print the first image on the first surface; causing the imaging unit to image the medium, on which the first image is printed, from a second surface that is a surface opposite to the first surface; and correcting, based on a captured image captured by the imaging unit and the feature point of the first image or the feature point of the second image, the second image to be printed on the second surface.
   With this configuration, it is possible to recognize, based on a captured image obtained by imaging the medium from the second surface, the feature point of the first image or the feature point of the second image corresponding to the feature region of the first surface onto which the pretreatment liquid has been ejected. Accordingly, it is possible to improve the accuracy of correcting the second image to be printed on the second surface. Therefore, it is possible to improve the printing accuracy of the first image and the second image.
[2] In the printing apparatus, the control unit may execute causing the ink ejecting unit to eject the ink onto the second surface of the medium, on which the first image is printed, to thereby print a second corrected image obtained by correcting the second image. With this configuration, it is possible to achieve the same effects as the effects in [1].
[3] In the printing apparatus, the control unit may set a feature point in the first image or the second image.
   With this configuration, it is possible to optionally set the feature point according to the first image or the second image.
[4] In the printing apparatus, the pretreatment liquid ejecting unit may eject, as the pretreatment liquid, penetrant that promotes permeation of the ink.
   With this configuration, the ink ejected to the feature region easily permeates from the first surface to the second surface. Accordingly, it is easy to recognize, based on the captured image obtained by imaging the medium from the second surface, the feature point of the first image or the feature point of the second image corresponding to the feature region of the first surface with the ink permeating to the second surface. Accordingly, it is possible to improve the accuracy of correcting the second image to be printed on the second surface. Therefore, it is possible to improve the printing accuracy of the first image and the second image.
[5] In the printing apparatus, the imaging unit may image the medium using infrared rays.
   With this configuration, it is possible to capture a captured image including a situation not only on the second surface but also on the first surface by using infrared rays. Accordingly, it is easy to recognize, based on the captured image obtained by imaging the medium from the second surface, the feature point of the first image or the feature point of the second image corresponding to the feature region of the first surface onto which the pretreatment liquid has been ejected. Accordingly, it is possible to improve the accuracy of correcting the second image to be printed on the second surface. Therefore, it is possible to improve the printing accuracy of the first image and the second image.
[6] In the printing apparatus, the pretreatment liquid ejecting unit may eject white ink as the pretreatment liquid.
   With this configuration, the white ink that reflects infrared rays is ejected as the pretreatment liquid. Accordingly, it is easy to recognize, based on the captured image obtained by imaging the medium from the second surface, the feature point of the first image or the feature point of the second image corresponding to the feature region of the first surface onto which the pretreatment liquid has been ejected. Accordingly, it is possible to improve the accuracy of correcting the second image to be printed on the second surface. Therefore, it is possible to improve the printing accuracy of the first image and the second image.
[7] In the printing apparatus, the ink ejecting unit may eject pigment ink. With this configuration, it is possible to achieve the same effects as the effects in [6].
[8] In the printing apparatus, the control unit may execute setting a feature point of the first image or a feature point of the second image with respect to a region to which black ink is ejected in the first image, and the pretreatment liquid ejecting unit may eject, as the pretreatment liquid, white ink to the feature region to which the black ink is ejected in the first image.
   With this configuration, the white ink is ejected as the pretreatment liquid to the feature region to which the black ink that absorbs infrared rays is ejected in the first image. Accordingly, it is easy to recognize, based on the captured image obtained by imaging the medium from the second surface, the feature point of the first image or the feature point of the second image corresponding to the feature region of the first surface onto which the pretreatment liquid has been ejected. Accordingly, it is possible to improve the accuracy of correcting the second image to be printed on the second surface. Therefore, it is possible to improve the printing accuracy of the first image and the second image.
[9] In the printing apparatus, the control unit may adjust, based on thickness of the medium, an ejection amount of the pretreatment liquid ejected by the pretreatment liquid ejecting unit.
   With this configuration, by adjusting the ejection amount of the pretreatment liquid according to the thickness of the medium, it is easy to recognize, based on the captured image obtained by imaging the medium from the second surface, the feature point of the first image or the feature point of the second image corresponding to the feature region of the first surface onto which the pretreatment liquid has been ejected. Accordingly, it is possible to improve the accuracy of correcting the second image to be printed on the second surface. Therefore, it is possible to improve the printing accuracy of the first image and the second image.
[10] A control method for a printing apparatus that prints a first image by ejecting ink onto a first surface of a medium and prints a second image by ejecting the ink onto a second surface of the medium, the second surface being a surface opposite to the first surface, the method including: causing the printing apparatus to eject pretreatment liquid to a feature region of the first surface corresponding to a feature point of the first image or a feature point of the second image; causing the printing apparatus to eject the ink onto the first surface of the medium, onto the feature region of which the pretreatment liquid was ejected, to thereby print the first image on the first surface; causing the printing apparatus to image the medium, on which the first image is printed, from the second surface; and correcting, based on a captured image and the feature point of the first image or the feature point of the second image, the second image to be printed on the second surface. With this configuration, it is possible to achieve the same effects as the effects in [1].

## Claims

1. A printing apparatus comprising:
a pretreatment liquid ejecting unit configured to eject pretreatment liquid onto a medium;
an ink ejecting unit configured to eject ink onto the medium to thereby print an image on the medium;
an imaging unit configured to image the medium; and
a control unit, wherein
the control unit executes:
causing the pretreatment liquid ejecting unit to eject the pretreatment liquid to a feature region of a first surface of the medium corresponding to a feature point of a first image or a feature point of a second image;
causing the ink ejecting unit to eject the ink onto the first surface of the medium, onto the feature region of which the pretreatment liquid was ejected, to thereby print the first image on the first surface;
causing the imaging unit to image the medium, on which the first image is printed, from a second surface that is a surface opposite to the first surface; and
correcting, based on a captured image captured by the imaging unit and the feature point of the first image or the feature point of the second image, the second image to be printed on the second surface.

2. The printing apparatus according to claim 1, wherein the control unit executes causing the ink ejecting unit to eject the ink onto the second surface of the medium, on which the first image is printed, to thereby print a second corrected image obtained by correcting the second image.

3. The printing apparatus according to claim 2, wherein the control unit sets a feature point in the first image or the second image.

4. The printing apparatus according to claim 1, wherein the pretreatment liquid ejecting unit ejects, as the pretreatment liquid, penetrant that promotes permeation of the ink.

5. The printing apparatus according to claim 1, wherein the imaging unit images the medium using infrared rays.

6. The printing apparatus according to claim 5, wherein the pretreatment liquid ejecting unit ejects white ink as the pretreatment liquid.

7. The printing apparatus according to claim 6, wherein the ink ejecting unit ejects pigment ink.

8. The printing apparatus according to claim 7, wherein
the control unit executes setting a feature point of the first image or a feature point of the second image with respect to a region to which black ink is ejected in the first image, and
the pretreatment liquid ejecting unit ejects, as the pretreatment liquid, white ink to the feature region to which the black ink is ejected in the first image.

9. The printing apparatus according to claim 1, wherein the control unit adjusts, based on thickness of the medium, an ejection amount of the pretreatment liquid ejected by the pretreatment liquid ejecting unit.

10. A control method for a printing apparatus that prints a first image by ejecting ink onto a first surface of a medium and prints a second image by ejecting the ink onto a second surface of the medium, the second surface being a surface opposite to the first surface, the method comprising:
causing the printing apparatus to eject pretreatment liquid to a feature region of the first surface corresponding to a feature point of the first image or a feature point of the second image;
causing the printing apparatus to eject the ink onto the first surface of the medium, onto the feature region of which the pretreatment liquid was ejected, to thereby print the first image on the first surface;
causing the printing apparatus to image the medium, on which the first image is printed, from the second surface; and
correcting, based on a captured image and the feature point of the first image or the feature point of the second image, the second image to be printed on the second surface.
